# EUROPEAN PATENT SPECIFICATION

(11) **EP 3 697 885 B1**
(45) Date of publication and mention of the grant of the patent: **13.08.2025**
(21) Application number: 18789603.0
(22) Date of filing: 17.10.2018
(51) Int. Cl.: C12G 1/022

(54) **VAT FOR WINEMAKING PLANTS**
BOTTICH FÜR WEINHERSTELLUNGSANLAGEN
CUVE POUR INSTALLATIONS DE VINIFICATION

(30) Priority: 17.10.2017 IT 201700116822
(43) Date of publication of application: 26.08.2020
(73) Proprietor: Defranceschi S.r.l., 40026 Imola (BO) (IT)
(72) Inventor: MARASTONI, Daniele, 40017 San Giovanni in Persiceto (IT); RICCI, Claudio, 40026 Imola (IT)
(74) Representative: Modiano, Micaela Nadia
(86) International application number: PCT/EP2018/078446
(87) International publication number: WO 2019/076996

(56) References cited:
- WO-A2-03/079826
- CN-U- 204 125 443
- DE-U1- 202013 011 467
- US-A1- 2003 066 429
- US-A1- 2010 288 130

## Description

The present invention relates to a vat for winemaking plants.

Winemaking is the biochemical process of converting grapes into wine and its maturing.

The skin of the grapes retains some yeasts that convert the sugar contained in the grapes to alcohol: this process is called alcoholic fermentation.

Polyphenols, contained in the skins and in the seeds, are obtained during the maceration which is performed in the initial step of the fermentation of the must.

The maceration enables the extraction of flavonoids and other substances, depending on the temperature and on the duration of contact with the skins; if the maceration is brief (less than 24 hours) it usually produces rosé wines, while a maceration lasting three to five days generally produces new wines to be drunk immediately; lastly, a long maceration, of from seven to twenty-one days, usually produces wine for a long aging.

The vats used for winemaking, and in particular for fermentation and/or for aging, are commonly made of wood, concrete, steel or fiberglass reinforced plastic.

Wood barrels are generally used for aging because they give aromas to the wine and they allow the micro-oxygenation of the wine. They are rather expensive, they require complex maintenance and they present a certain difficulty in cooling.

Vats or tanks made of concrete are very cheap and have various different shapes which allow to optimize the space in the wine cellar; they are porous to oxygen and therefore they can ensure the micro-oxygenation of the wine.

Against this, concrete, in contact with the wine, can release calcium ions, and this can result in the formation of calcium bitartrate crystals. In order to prevent this, the inner surface of concrete tanks is sometimes either tiled or coated with a layer of paint. Cleaning concrete tanks is not particularly straightforward and it is not easy to ensure efficacious cooling.

Furthermore, it is not possible to certify concrete for contact with foods.

Vats made of steel are very light, easy to maintain and are adapted for heat exchange. They are however extremely lacking in terms of oxygenation.

Similar problems are found in vats made of fiberglass reinforced plastic, a material that is essentially constituted by polyester reinforced with glass fibers.

CN204125443, US2003066429 and WO03079826 describe winemaking systems.

The aim of the present invention is to provide a vat for winemaking plants which is capable of improving the known art in one or more of the above mentioned aspects.

Within this aim, an object of the invention is to provide a vat for winemaking plants that ensures great lightness, ease of cleaning, high capacity for heat exchange, oxygenation, and an absolute guarantee of full compatibility for contact with food products.

Another object of the invention is to provide a vat for winemaking plants that is highly reliable, easy to implement and at low cost.

This aim and these and other objects which will become better apparent hereinafter are achieved by a vat for winemaking plants according to claim 1, optionally provided with one or more of the characteristics of the dependent claims.

Further characteristics and advantages of the invention will become better apparent from the description of some preferred, but not exclusive, embodiments of the vat for winemaking plants according to the invention, which are illustrated for the purposes of non-limiting example in the accompanying drawings wherein:
- Figure 1 is a perspective view of the vat according to the invention;
- Figure 2 is a perspective view of a portion of the lateral surface of the vat;
- Figure 3 is a diametrical cross-sectional view of the vat taken along a horizontal plane;
- Figure 4 is an enlargement of the cross-section in Figure 3;
- Figure 5 is a perspective view of another embodiment of the vat according to the invention;
- Figure 6 is a view from above in which, for the sake of clarity, a part of the upper closure element 4 is removed.

With reference to the figures, the vat for winemaking plants according to the invention, generally designated by the reference numeral 1, comprises a lateral surface 2, a bottom 3 and an upper closure element 4.

According to the present invention, the lateral surface 2 defines an active portion 2a, at least equal to 30% of the lateral surface 2 and, preferably, at least equal to 50% of the lateral surface 2.

Conveniently, the active portion 2a is at least equal to 75% of the lateral surface 2.

In particular, the active portion 2a is made of ceramic and/or refractory material.

The bottom 3 and/or the upper closure element 4 can have a portion made of ceramic and/or refractory material.

Conveniently, such ceramic and/or refractory material comprises porcelain stoneware.

In particular, the active portion 2a is made of plates of ceramic and/or refractory material 30.

Conveniently, the plates of ceramic and/or refractory material 30 have a substantially flat shape or a curved shape.

According to the present invention, the active portion 2a is associated stably, at its outward-facing surface, with a supporting structure 11.

The supporting structure 11 defines, in particular, a load-bearing structure for the respective plate of ceramic and/or refractory material.

Advantageously, the supporting structure 11 is made of metallic material, for example stainless steel adapted for use in the food sector.

The supporting structure 11 is furthermore associated with at least one channeling surface 12 which faces a portion of the external surface of the respective plate in order to define at least one oxygenation channel 20.

Conveniently, the channeling surface 12 is integrated in the supporting structure 11.

The oxygenation channel or channels 20 are functionally associated with a device for forced introduction of air and/or oxygen which is adapted to allow the regulation, and optionally the interruption, of the flow of air and/or of oxygen through the oxygenation channel or channels 20.

The vat 1 is associated with a conditioning device, which is adapted to regulate the temperature of the liquid placed inside the vat 1.

The oxygenation channels 20 are functionally associated with a device for the forced introduction of air and/or oxygen.

Such device for forced introduction is further functionally associated with the conditioning device.

In particular, the vat 1 may comprise sensor means for detecting the temperature of the liquid contained in the vat 1.

The vat 1 is further associated with a control and command device, which is functionally connected to the sensor means and is adapted to actuate the device for forced introduction and the conditioning device.

It has in fact been found that the optimization of the micro-oxygenation process depends on the temperature of the liquid and, as a consequence, by virtue of the control device connected to the sensor means, it is possible to intervene on the conditioning device in order to bring the liquid contained inside the vat 1 to the optimal temperature for micro-oxygenation.

The conditioning device can comprise a heat exchanger which has a heat exchange surface in contact with the liquid placed inside the vat 1.

Such heat exchanger can be arranged at the lateral surface of the vats (for example between contiguous plates of ceramic material), or at the bottom or at the closure element.

The supporting structure 11 can likewise be associated with at least one heat exchange surface 40 in contact with respective heat exchange portions defined on the external surface of the plates of ceramic and/or refractory material.

Specifically, the heat exchange surface or surfaces 40 is/are integrated in the supporting structure.

The heat exchange surface 40 or the heat exchanger can be defined by a respective heat exchange element, preferably having a tubular shape, which is associated with a device for introducing and for controlling a conditioning fluid.

According to a preferred practical embodiment, adhesive fixing means are envisaged between the supporting structure 11 and the outward-directed surface of the plates of ceramic and/or refractory material 30.

By way of example, the adhesive means comprise a glue.

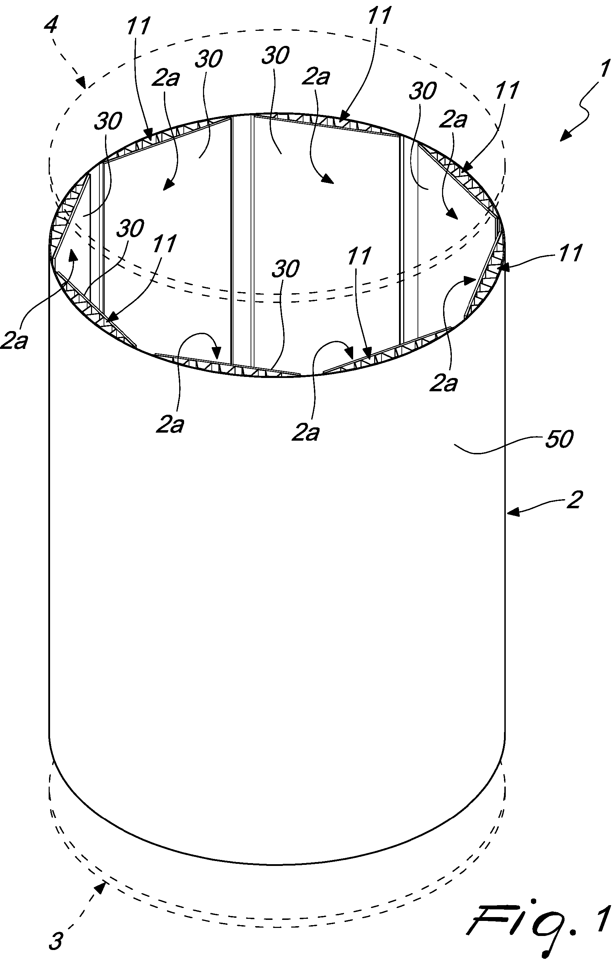

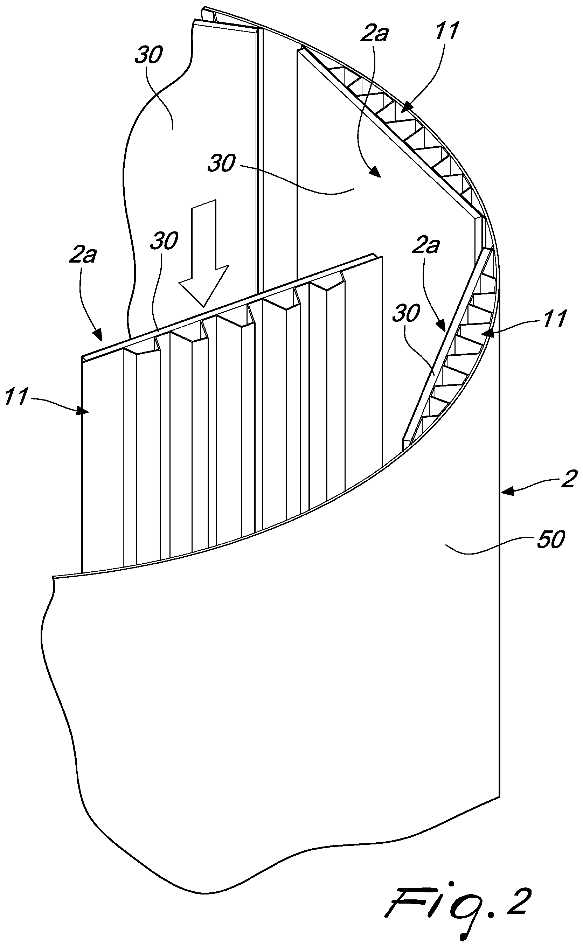

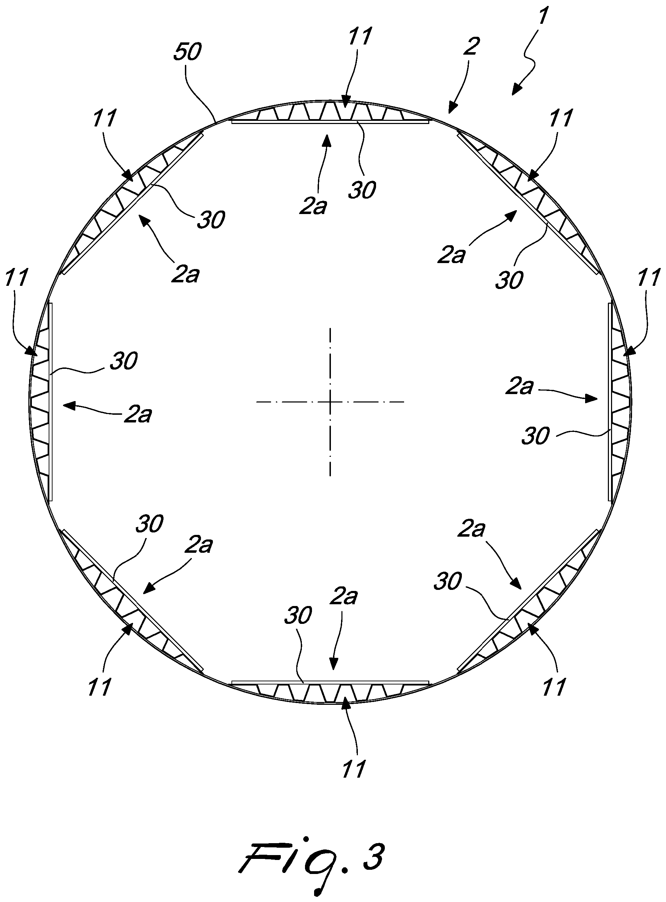

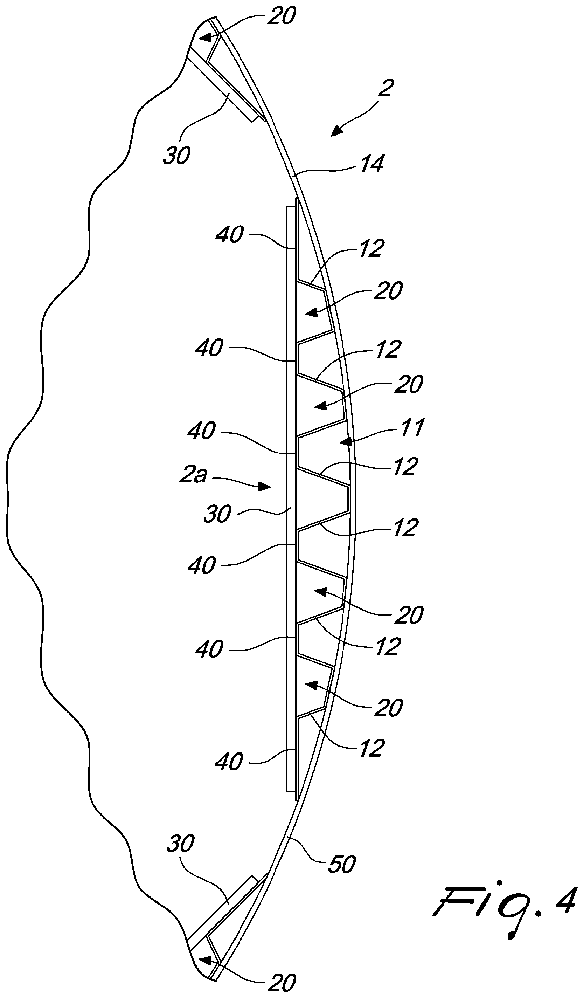

With reference to the embodiment shown in Figures 1 to 4, the adhesive is interposed between the heat exchange surfaces 40 and the heat exchange portions.

Conveniently, the supporting structure 11 has an undulating shape which defines, in an alternating manner with respect to a transverse plane, the heat exchange surfaces 40 and the channeling surfaces 12.

The active surface 2a is provided with a plurality of plates of ceramic and/or refractory material in order to provide a substantially polygonal structure (for example hexagonal or octagonal).

The supporting structure 11 defines angular connecting elements 14 which are intended to be arranged outside the areas of angular connection between contiguous plates of ceramic and/or refractory material 30.

The angular elements can comprise a portion of a cylindrical shell 50 which is arranged externally to the supporting structure 11 or is integrated with it.

Conveniently, the lateral surface 2 is provided with an outlet.

Preferably, the radius of curvature of the plate, if it is curved in shape, is comprised between 0.5 m and 10 m.

Conveniently, the plates have a thickness comprised between 6 mm and 50 mm, and more preferably comprised between 6 mm and 20 mm.

Conveniently, the plates have a porosity of less than 1%.

Conveniently, the porcelain stoneware used has a density comprised between 1.9 kg/dm³ and 2.4 kg/dm³.

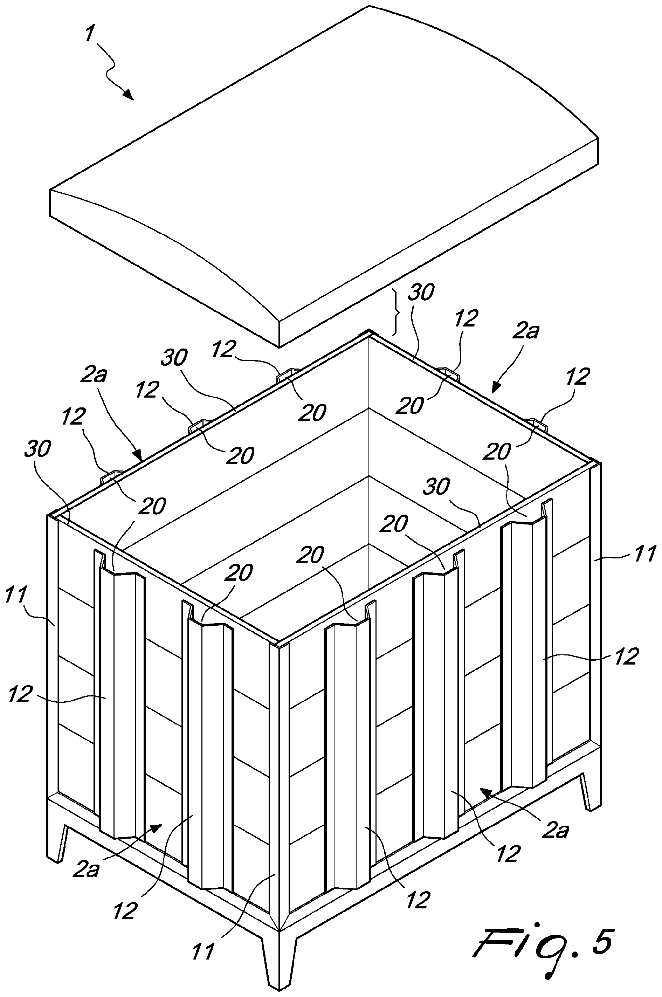

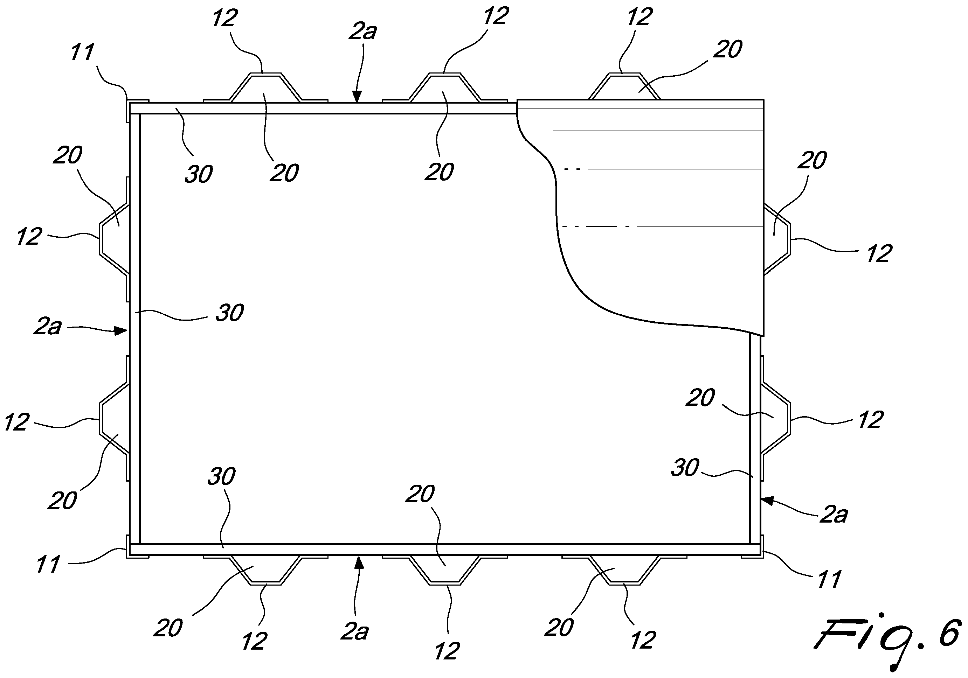

With reference to the embodiment shown in Figures 5 and 6, it is possible for the vat for winemaking plants 1 to define a lateral surface 2, a bottom 3 and an upper closure element 4.

The lateral surface 2 defines an active portion 2a, at least equal to 30%, and preferably at least equal to 50%, of the lateral surface 2.

Conveniently, the active portion 2a is at least equal to 75% of the lateral surface 2 and is made of stoneware.

In particular, the active portion 2a is made of plates of stoneware 30.

Conveniently, the plates of stoneware 30 have a substantially flat shape or a curved shape.

According to the present invention, the active portion 2a is associated stably, at its outward-facing surface, with a supporting structure 11.

The supporting structure 11 defines, in particular, a load-bearing structure for the respective plate of stoneware which comprises, in the specific case, a plurality of vertical posts 11a, which are optionally connected by way of horizontal crossmembers 11b.

Advantageously, the supporting structure 11 is made of metallic material, for example stainless steel adapted for use in the food sector.

The supporting structure 11 is furthermore associated with at least one channeling surface 12 which faces a portion of the external surface of the respective plate in order to define at least one oxygenation channel 20.

Conveniently, the channeling surface 12 is integrated in the supporting structure 11.

In such embodiment as well, the vat 1 is associated with a conditioning device, which is adapted to regulate the temperature of the liquid placed inside the vat 1.

The oxygenation channel or channels 20 are functionally associated with a device for forced introduction of air and/or oxygen which is adapted to allow the regulation, and optionally the interruption, of the flow of air and/or of oxygen through the oxygenation channel or channels 20.

The supporting structure 11 is further associated with at least one heat exchange surface 40 in contact with respective heat exchange portions defined on the external surface of the plates of ceramic and/or refractory material.

Specifically, the heat exchange surface or surfaces 40 is/are integrated in the supporting structure.

The heat exchange surface 40 is defined by a respective heat exchange element, preferably having a tubular shape, which is associated with a device for introducing and for controlling a conditioning fluid.

According to a preferred practical embodiment, adhesive fixing means are envisaged between the supporting structure 11 and the outward-directed surface of the plates of ceramic and/or refractory material 30.

By way of example, the adhesive means comprise a glue.

With reference to the embodiment shown in the figures, the adhesive is interposed between the heat exchange surfaces 40 and the heat exchange portions.

Use of the vat 1 for winemaking plants, according to the invention, is evident from the foregoing description.

Use of the vat 1 for winemaking plants, according to the invention, is evident from the foregoing description.

In practice it has been found that the invention fully achieves the intended aim and objects by providing a vat that has high characteristics of heat exchange, is capable of ensuring a correct oxygenation, and is certifiable for contact with foods.

Providing the active portion 2a in plates allows in fact to control the porosity in a precise manner.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A vat (1) for winemaking plants, which comprises a lateral surface (2), a bottom (3) and an upper closure element (4),wherein said lateral surface (2) defines an active portion (2a), at least equal to 30% of the surface, which is made of plates of ceramic and/or refractory material (30) and is associated stably, at its outward-directed surface, with a supporting structure (11) which is associated with at least one channeling surface (12) which faces a portion of the external surface of the respective plate in order to define at least one oxygenation channel (20),
**characterized in that** said vat (1) is associated with a conditioning device which is adapted to control the temperature of the liquid placed inside said vat (1), and
**in that** said at least one oxygenation channel (20) is functionally associated with a device for the forced introduction of air and/or oxygen which is adapted to allow the regulation of the flow of air and/or of oxygen through said at least one oxygenation channel (20), said device for forced introduction being functionally associated with said conditioning device.

2. The vat (1) according to claim 1, **characterized in that** said supporting structure (11) defines a load-bearing structure for the respective plate of ceramic and/or refractory material (30) which is made of metallic material adapted for use in the food sector.

3. The vat (1) according to claim 1, **characterized in that** said at least one plate of ceramic and/or refractory material (30) has a substantially flat shape or a curved shape.

4. The vat (1) according to one or more of the preceding claims, **characterized in that** said channeling surface (12) is integrated in the supporting structure (11).

5. The vat (1) according to one or more of the preceding claims, **characterized in that** it comprises sensor means for the detection of the temperature of the liquid contained in said vat (1), there being a control and command device which is connected functionally to said sensor means and is adapted to actuate said device for forced introduction and said conditioning device.

6. The vat (1) according to one or more of the preceding claims, **characterized in that** said device for forced introduction is adapted to allow the regulation, and optionally the interruption, of the flow of air and/or of oxygen through the oxygenation channel or channels (20).

7. The vat (1) according to one or more of the preceding claims, **characterized in that** said conditioning device comprises a heat exchanger which has a heat exchange surface in contact with the liquid placed inside said vat (1).

8. The vat (1) according to one or more of the preceding claims, **characterized in that** said supporting structure (11) is associated with at least one heat exchange surface (40) in contact with respective heat exchange portions defined on the external surface of said plates of ceramic and/or refractory material (30).

9. The vat (1) according to the preceding claim, **characterized in that** said at least one heat exchange surface (40) is integrated in the supporting structure (11).

10. The vat (1) according to claim 8 or 9, **characterized in that** said at least one heat exchange surface (40) is defined by a respective heat exchange element, preferably having a tubular shape, which is associated with a device for introducing and for controlling a conditioning fluid.

11. The vat (1) according to one or more of the claims 8 to 10, **characterized in that** said supporting structure (11) has an undulating shape which defines, in an alternating manner with respect to a transverse plane, said heat exchange surfaces (40) and said channeling surfaces (12).

12. The vat (1) according to one or more of the preceding claims, **characterized in that** it comprises adhesive means for fixing between said supporting structure (11) and the outward-directed surface of the plates of ceramic and/or refractory material (30).

13. The vat (1) according to one or more of the preceding claims, **characterized in that** said active surface (2a) is provided with a plurality of plates of ceramic and/or refractory material (30) in order to provide a substantially polygonal structure.

14. The vat (1) according to one or more of the preceding claims, **characterized in that** said plates of ceramic and/or refractory material (30) have a radius of curvature of the plate comprised between 0.5 m and 10 m.

15. The vat (1) according to one or more of the preceding claims, **characterized in that** said plates of ceramic and/or refractory material have a thickness comprised between 6 mm and 50 mm.

16. The vat (1) according to one or more of the preceding claims, **characterized in that** said plates of ceramic and/or refractory material have a porosity of less than 1%.

17. The vat (1) according to one or more of the preceding claims, **characterized in that** said ceramic and/or refractory material used has a density comprised between 1.9 kg/dm³ and 2.4 kg/dm³.

18. The vat (1) according to one or more of the preceding claims, **characterized in that** said ceramic and/or refractory material comprises porcelain stoneware.

## Patentansprüche

1. Ein Bottich (1) für Weinherstellungsanlagen, der eine Seitenfläche (2), einen Boden (3) und ein oberes Verschlusselement (4) umfasst, wobei die Seitenfläche (2) einen aktiven Abschnitt (2a), mindestens gleich 30% der Oberfläche, bestimmt, der aus Platten von Keramik und/oder feuerfestem Material (30) besteht und an seiner nach außen gerichteten Oberfläche mit einer tragenden Struktur (11) verbunden ist, welche mit mindestens einer kanalbildenden Oberfläche (12) zusammenhängt, die einem Teil der äußeren Oberfläche der jeweiligen Platte zugewandt ist, um mindestens einen Oxidationskanal (20) zu bestimmen,
**dadurch gekennzeichnet, dass** der Bottich (1) mit einer Klimatisierungsvorrichtung verbunden ist, die ausgebildet ist, um die Temperatur der Flüssigkeit zu steuern, die sich in dem Bottich (1) befindet, und
dadurch, dass der mindestens eine Oxidationskanal (20) funktionell mit einer Vorrichtung für den erzwungenen Einlass von Luft und/oder Sauerstoff verknüpft ist, die ausgebildet ist, um die Regulierung des Stroms von Luft und/oder Sauerstoff durch den mindestens einen Oxidationskanal (20) zu gestatten; wobei die Vorrichtung für den erzwungenen Einlass funktionell mit der Klimatisierungsvorrichtung verknüpft ist.

2. Der Bottich (1) gemäß Anspruch 1, **dadurch gekennzeichnet, dass** die tragende Struktur (11) eine lasttragende Struktur für die jeweilige Platte aus Keramik und/oder feuerfestem Material (30) bestimmt, die aus Metallmaterial besteht, das zur Verwendung im Lebensmittelsektor geeignet ist.

3. Der Bottich (1) gemäß Anspruch 1, **dadurch gekennzeichnet, dass** die mindestens eine Platte aus Keramik und/oder feuerfestem Material (30) eine im Wesentlichen flache Form oder eine gekrümmte Form hat.

4. Der Bottich (1) gemäß einem oder mehreren der obigen Ansprüche, **dadurch gekennzeichnet, dass** die kanalbildende Oberfläche (12) in die tragende Struktur (11) integriert ist.

5. Der Bottich (1) gemäß einem oder mehreren der obigen Ansprüche, **dadurch gekennzeichnet, dass** er Sensormittel für die Erfassung der Temperatur der in dem Bottich (1) enthaltenen Flüssigkeit umfasst, wobei eine Steuerungs- und Befehlsvorrichtung vorhanden ist, welche funktionell mit den Sensormitteln verknüpft und ausgebildet ist, um die Vorrichtung für den erzwungenen Einlass und die Klimatisierungsvorrichtung zu bedienen.

6. Der Bottich (1) gemäß einem oder mehreren der obigen Ansprüche, **dadurch gekennzeichnet, dass** die Vorrichtung für den erzwungenen Einlass ausgebildet ist, um die Regulierung, und wahlweise die Unterbrechung, des Stroms von Luft und/oder Sauerstoff durch den/die Oxidationskanal/Oxidationskanäle (20) zu ermöglichen.

7. Der Bottich (1) gemäß einem oder mehreren der obigen Ansprüche, **dadurch gekennzeichnet, dass** die Klimatisierungsvorrichtung einen Wärmetauscher umfasst, der eine Wärmetauschoberfläche in Kontakt mit der Flüssigkeit innerhalb des Bottichs (1) hat.

8. Der Bottich (1) gemäß einem oder mehreren der obigen Ansprüche, **dadurch gekennzeichnet, dass** die tragende Struktur (11) mit mindestens einer Wärmetauschoberfläche (40) in Kontakt mit jeweiligen Wärmetauschabschnitten verbunden ist, die auf der äußeren Oberfläche der Platten aus Keramik und/oder feuerfestem Material (30) bestimmt sind.

9. Der Bottich (1) gemäß dem obigen Anspruch, **dadurch gekennzeichnet, dass** die mindestens eine Wärmetauschoberfläche (40) in die tragende Struktur (11) integriert ist.

10. Der Bottich (1) gemäß Anspruch 8 oder 9, **dadurch gekennzeichnet, dass** die mindestens eine Wärmetauschoberfläche (40) durch ein entsprechendes Wärmetauschelement bestimmt ist, das vorzugsweise röhrenförmig ist und mit einer Vorrichtung zum Einlassen und Steuern eines Klimatisierungsmittels verknüpft ist.

11. Der Bottich (1) gemäß einem oder mehreren der Ansprüche 8 bis 10, **dadurch gekennzeichnet, dass** die tragende Struktur (11) eine Wellenform hat, welche, alternierend mit Bezug auf eine transversale Ebene, die Wärmetauschoberflächen (40) und die kanalbildenden Oberflächen (12) bestimmt.

12. Der Bottich (1) gemäß einem oder mehreren der obigen Ansprüche, **dadurch gekennzeichnet, dass** er Klebemittel zur Befestigung zwischen der tragenden Struktur (11) und der nach außen gerichteten Oberfläche der Platten aus Keramik und/oder feuerfestem Material (30) umfasst.

13. Der Bottich (1) gemäß einem oder mehreren der obigen Ansprüche, **dadurch gekennzeichnet, dass** die aktive Oberfläche (2a) zum Bereitstellen einer im Wesentlichen vieleckigen Struktur mit einer Vielzahl von Platten aus Keramik und/oder feuerfestem Material (30) versehen ist.

14. Der Bottich (1) gemäß einem oder mehreren der obigen Ansprüche, **dadurch gekennzeichnet, dass** die Platten aus Keramik und/oder feuerfestem Material (30) einen Krümmungsradius zwischen 0,5m und 10m haben.

15. Der Bottich (1) gemäß einem oder mehreren der obigen Ansprüche, **dadurch gekennzeichnet, dass** die Platten aus Keramik und/oder feuerfestem Material eine Dicke zwischen 6 mm und 50 mm haben.

16. Der Bottich (1) gemäß einem oder mehreren der obigen Ansprüche, **dadurch gekennzeichnet, dass** die Platten aus Keramik und/oder feuerfestem Material eine Porosität von weniger als 1% haben.

17. Der Bottich (1) gemäß einem oder mehreren der obigen Ansprüche, **dadurch gekennzeichnet, dass** die verwendete Keramik und/oder das verwendete feuerfeste Material eine Dichte zwischen 1,9 kg/dm³ und 2,4 kg/dm³ haben.

18. Der Bottich (1) gemäß einem oder mehreren der obigen Ansprüche, **dadurch gekennzeichnet, dass** die Keramik und/oder das feuerfeste Material Feinsteinzeug umfassen.

## Revendications

1. Une cuve (1) pour installations de vinification, qui comprend une surface latérale (2), un fond (3) et un élément de fermeture supérieur (4), dans laquelle ladite surface latérale (2) définit une partie active (2a), au moins égale à 30 % de la surface, qui est constituée de plaques en céramique et/ou en matériau réfractaire (30) et est associée de manière stable, au niveau de sa surface tournée vers l'extérieur, à une structure de support (11) qui est associée à au moins une surface de canalisation (12) qui fait face à une partie de la surface externe de la plaque respective afin de définir au moins un canal d'oxygénation (20),
**caractérisée en ce que** ladite cuve (1) est associée à un dispositif de conditionnement qui est adapté pour contrôler la température du liquide placé à l'intérieur de ladite cuve (1), et
**en ce que** ledit au moins un canal d'oxygénation (20) est associé fonctionnellement à un dispositif d'introduction forcée d'air et/ou d'oxygène qui est adapté pour permettre la régulation du débit d'air et/ou d'oxygène à travers ledit au moins un canal d'oxygénation (20), ledit dispositif d'introduction forcée étant associé fonctionnellement audit dispositif de conditionnement.

2. La cuve (1) selon la revendication 1, **caractérisée en ce que** ladite structure de support (11) définit une structure porteuse pour la plaque respective en céramique et/ou en matériau réfractaire (30) qui est réalisée en un matériau métallique adapté à une utilisation dans le secteur alimentaire.

3. La cuve (1) selon la revendication 1, **caractérisée en ce que** ladite au moins une plaque en matériau céramique et/ou réfractaire (30) présente une forme sensiblement plane ou une forme courbe.

4. La cuve (1) selon une ou plusieurs des revendications précédentes, **caractérisée en ce que** ladite surface de canalisation (12) est intégrée dans la structure de support (11).

5. La cuve (1) selon l'une ou plusieurs des revendications précédentes, **caractérisée en ce qu'**elle comprend des moyens de capteur pour la détection de la température du liquide contenu dans ladite cuve (1), un dispositif de contrôle et de commande étant relié fonctionnellement auxdits moyens de capteur et adapté pour actionner ledit dispositif d'introduction forcée et ledit dispositif de conditionnement.

6. La cuve (1) selon une ou plusieurs des revendications précédentes, **caractérisée en ce que** ledit dispositif d'introduction forcée est adapté pour permettre la régulation, et éventuellement l'interruption, du débit d'air et/ou d'oxygène à travers le ou les canaux d'oxygénation (20).

7. La cuve (1) selon une ou plusieurs des revendications précédentes, **caractérisée en ce que** ledit dispositif de conditionnement comprend un échangeur de chaleur qui présente une surface d'échange thermique en contact avec le liquide placé à l'intérieur de ladite cuve (1).

8. La cuve (1) selon l'une ou plusieurs des revendications précédentes, **caractérisée en ce que** ladite structure de support (11) est associée à au moins une surface d'échange thermique (40) en contact avec des parties d'échange thermique respectives définies sur la surface externe desdites plaques en céramique et/ou en matériau réfractaire (30).

9. La cuve (1) selon la revendication précédente, **caractérisée en ce que** ladite au moins une surface d'échange thermique (40) est intégrée dans la structure de support (11).

10. La cuve (1) selon la revendication 8 ou 9, **caractérisée en ce que** ladite au moins une surface d'échange thermique (40) est définie par un élément d'échange thermique respectif, de préférence de forme tubulaire, qui est associé à un dispositif d'introduction et de contrôle d'un fluide de conditionnement.

11. La cuve (1) selon l'une ou plusieurs des revendications 8 à 10, **caractérisée en ce que** ladite structure de support (11) présente une forme ondulée qui définit, de manière alternée par rapport à un plan transversal, lesdites surfaces d'échange thermique (40) et lesdites surfaces de canalisation (12).

12. La cuve (1) selon l'une ou plusieurs des revendications précédentes, **caractérisée en ce qu'**elle comprend des moyens adhésifs pour la fixation entre ladite structure de support (11) et la surface tournée vers l'extérieur des plaques en céramique et/ou en matériau réfractaire (30).

13. La cuve (1) selon l'une ou plusieurs des revendications précédentes, **caractérisée en ce que** ladite surface active (2a) est pourvue d'une pluralité de plaques en matériau céramique et/ou réfractaire (30) afin de former une structure sensiblement polygonale.

14. La cuve (1) selon l'une ou plusieurs des revendications précédentes, **caractérisée en ce que** lesdites plaques en matériau céramique et/ou réfractaire (30) ont un rayon de courbure compris entre 0,5 m et 10 m.

15. La cuve (1) selon l'une ou plusieurs des revendications précédentes, **caractérisée en ce que** lesdites plaques en céramique et/ou en matériau réfractaire ont une épaisseur comprise entre 6 mm et 50 mm.

16. La cuve (1) selon l'une ou plusieurs des revendications précédentes, **caractérisée en ce que** lesdites plaques en céramique et/ou en matériau réfractaire ont une porosité inférieure à 1 %.

17. La cuve (1) selon l'une ou plusieurs des revendications précédentes, **caractérisée en ce que** ledit matériau céramique et/ou réfractaire utilisé a une densité comprise entre 1,9 kg/dm³ et 2,4 kg/dm³.

18. La cuve (1) selon l'une ou plusieurs des revendications précédentes, **caractérisée en ce que** ledit matériau céramique et/ou réfractaire comprend du grès cérame.
